# EUROPEAN PATENT APPLICATION

(11) **EP 3 905 110 A1**
(43) Date of publication of application: **03.11.2021**
(21) Application number: 20172329.3
(22) Date of filing: 30.04.2020
(51) Int. Cl.: G06K 9/00

(54) **SYSTEM FOR CONTROLLING AGRICULTURAL OPERATIONS BY OPTICAL MEANS**

(71) Applicant: Kverneland Group Operations Norway AS, 4353 Klepp Stasjon (NO)
(72) Inventor: HONKANEN, Joel, 4350 Kleppe (NO)
(74) Representative: Mader, Joachim

(57) **Abstract**

A system 1 for controlling agricultural operations comprising an agricultural working means 10 for working on an agricultural field 100; a first imaging device 20 attached to the agricultural working means 10 for acquiring images of an environment of the agricultural working means 10, wherein the first imaging device 20 is adapted to provide optical data; an agricultural implement 16 comprised by the agricultural working means 10; a sensor 18 at or for the agricultural implement 18, wherein the sensor 18 is adapted to provide sensor data; a position unit 30 for determining the absolute position of the agricultural working means 10, wherein the position unit 30 is adapted to provide position data; and a data processing unit 50 for processing optical data received at least from the first imaging device 20 in relation to position data received from the position unit 30 and the sensor data.

## Description

### 1. Field of the invention

The present invention relates to a system for controlling agricultural operations of a working means acting on an agricultural field. The user of the system can derive valuable information from a correlation of optical measurements, force measurements and positional data for optimize his or her production.

### 2. Prior art

Reference document US 2018/0068416 A1 discloses a system, wherein video data captured from an aerial vehicle (AV) is compressed into an aerial orthomosaic overview of an area. The orthomosaic may then be processed in combination with sensor values, measured by sensors sparsely deployed in the area, to generate precision maps for the entire area, including areas in which no sensors are deployed.

Further, reference document EP 0 857 325 B1 discloses an unmanned agricultural vehicle, wherein a monitoring system of the vehicle is provided with sensors on both sides of the vehicle close to the front and rear sides and in the center thereof and with the aid of which the distance to the ground can be measured, in that the monitoring system is provided with a computer which, after receiving signals from the sensors, is designed to transmit via the transceiver-installation a signal to a mobile transceiver-installation of a supervisor if the measured depth deviates from a required depth.

WO 2018/220528 A1 discloses a method for controlling a soil working means, particularly a robotic lawn mower, comprising acquiring at least one digital image of the soil by means of digital image acquisition means installed on the working means and processing, by means of an electronic processing unit, the at least one digital image acquired by performing at least one convolution operation on the digital image by means of a trained neural network.

The document EP 3 420 787 A1 discloses a method for controlling operation of an agricultural system, comprising a tractor and an implement hitched through a draw bar to the tractor. The draft force applied to the implement is determined by a sensor and used for the control of the working implement such that its working tools engage or disengage from the ground and/or the agricultural product.

Although some employments of optical systems in agricultural applications are known, there exists the need for a system that allows an enhanced optical spatial mapping to improve an agricultural operation.

### 3. Summary of the invention

The present invention proposes a system for controlling agricultural operations according to claim 1 and a respective computer program, respectively smartphone application comprising instructions for controlling agricultural operations by using a described system according to claim 15.

Particularly, the present invention proposes a system for controlling agricultural operations comprising an agricultural working means for working on an agricultural field; a first imaging device attached to the agricultural working means for acquiring images of an environment of the agricultural working means, wherein the first imaging device is adapted to provide optical data; an agricultural implement comprised by the agricultural working means; a sensor at or for the agricultural implement wherein the sensor is adapted to provide sensor data; a position unit for determining the absolute position of the agricultural working means, wherein the position unit is adapted to provide position data; a data processing unit for processing optical data received at least from the first imaging device in relation to position data received from the position unit and the sensor data.

Thus, an enhanced control system for agricultural applications can be provided, wherein respective optical, sensor data and position data for the agricultural working means are processed in the data processing unit for correlating these data and for using this data for the control of the agricultural working meas. This correlation aids a user to optimize the agricultural operation, for example in terms of efficiency of the procedure or in terms of fuel consumption of the agricultural working means. In particular, the position and optical information provided by the at least one first optical device may be combined with the sensor data and this may allow real time operation control, further planning or evaluation of the work performed. For example to set the ploughing speed and/or ploughing depth automatically during a ploughing operation. In such a case the camera images could be used to determine the growing state of the plants on the field and a draft sensor at the plough can be used to determine the humidity or hardness of the soil. The position unit determines the actual position for drawing a corresponding map in real time that can be used directly for informing the farmer or can be used at a later point in time for production planning.

The combined information can also be used for 2D and/or 3D photogrammetry, 2D and/or 3D mapping of the surroundings, feature detection, estimation of the work rate, work results, detection of anomalies in the field etc. Preferably, a 2D or 3D spatial data map can be generated by the data processing unit and can be displayed to the user as a graphical map. Further, such 2D and/or 3D photogrammetry data can be used for an automatic control of the operation parameters, by detection of the structure of the soil, 3D-topology of the field, slope detection, obstacle detection, etc. Thus, for example the tractor power or tractor speed can be adjusted prior to approaching a special area of the field, like a sloping terrain or the like. This allows an anticipatory control of the agricultural operation which can save fuel, optimize the operation speed or provides soil optimized operation parameters.

An agricultural operation may be for instance a soil working operation, like ploughing, or a harvesting operation. The agricultural working means can also be any agricultural tool, like for example a cultivator, a disc harrow, a packer, a roller, a chopper, a seed drill, a disc spreader, a mower, a rake, a tedder, a round bale wrapper, etc.

The first and second imaging devices may comprise one or more of a digital camera, an NDVI camera, a LASER device, a LIDAR device, a LEDDAR device, a light sensor, a color sensor and/or any suitable other optical sensing methods.

The information from different sensors at and/or for the agricultural implement may be used in combination with imaging data acquired thus allowing complex data acquisition which may enhance the characterization of the area detected. For example, one or more force sensors at the connection between the agricultural working means and agricultural implement for measuring the actual draft forces for the actual agricultural operation can be provided. Alternatively or additionally, force sensors at the agricultural implement could be provided that measure forces by elements of the agricultural implement, for example force sensors at individual plough shares, when working the soil, mowing, spreading seeds, etc.. Other sensors can measure the humidity of the soil, the nutrient content of the soil, soil thickness, soil consistency, etc. A draft force required for drafting or dragging an agricultural implement of the agricultural working means may yield additional information that is useful for the system that cannot easily be obtained from image data. For example, the system may be able to classify a geographic object as soil based on the image data. The drag force required for drafting an agricultural implement of the agricultural working means may allow determining the degree of compaction of the soil.

Data storage during working operation can be done for any data obtained by the employed sensors. Accordingly, each data sample/image frame maybe provided with a synchronized timestamp and position available for post viewing or further processing. It may also be possible to view and playback any data from a work session, which may include sensor data, optical images such as for instance raw footage and data relating to detected or labelled features, which may be used for further post processing work. This maybe performed by transferring the data via cloud to a remote location. For example a user may be enabled to click on the map at a certain location of a detected feature such as for instance a stone and it may be possible for the user to get the graph of for instance of a draft force measured by respective sensors at that location at the time window of passing the feature, which can be for instance indicated by a data peak on a graph.

In the present system the data of for instance optical sensors as well as other sensors may originate from several independent units, for example tractor, implement, mobile, GPS unit etc. To synchronize time of all measurements, the present invention may encompass means for providing a global and common clock time base which may be used to timestamp all data samples and images. This may require a common global clock or timing unit which may be accordingly provided with the present invention such that it may be ensured that all data (both optical and other sensor data) can be synchronized and placed accurate on a common timeline. Similarly, the position unit may ensure that all optical and other sensor data could be placed on the correct location on the map. Clock unit and position unit may be provided as the same unit or can be provided as separate units.

The potential further sensors may be adapted to acquire a complex 2D or 3D map in real time. However, also playback post work operations potentially at a remote location maybe allowed. The position unit may further comprise a position determination unit, which may be an integral or separate part of the position unit and which may be a receiver, such as a satellite receiver for exchanging data with a global positioning system and in particular a GPS receiver. This may provide absolute or relative position data of any part of the disclosed system, for instance the agricultural working means and the at least one first imaging device. The position determination unit may also be provided separately from the position unit and adapted to transfer its position data to the position unit in a suitable manner. It is noted that a unit within the context of the present invention should be understood as any kind of suitable hardware and/or software means, which would allow providing the described functionality.

It should be understood that the imaging device or imaging devices may be attached or mounted to an agricultural working means in a way that allows an adjustment (movement, rotation etc.) with respect to the agricultural working means in any desired direction to acquire an image for instance from different acquisition angles or positions. The imaging devices could be a digital cameras integrated into a tractor or implement. Thus, the camera system may be factory fitted or just a smart phone in a dedicated holder or cradle, or a consumer camera on a tripod or a third-party camera mounted to a driving means, like a tractor, and/or an implement, like a plough. The at least one first imaging device may also be arranged in a remote manner to the agricultural working means and thus not attached to the agricultural working means.

The system may allow for a correlation of the optical measurements by the imaging device and a combination with corresponding position data to provide exact spatial information of the agricultural field, e.g. in form of a 3D-map or 3D-data set on which the agricultural operation is performed. In particular, it may allow for a spatial representation obtained by images taken from different positions and/or acquisition angles. Thus, a more sophisticated way of providing spatial information can be provided by the system according to the present invention. The interpretation of the combined image data and position data can be used to better identify and localize features of interest in the agricultural field, which may be inspected further, to allow performing agricultural working tasks in an optimized way, for example in the economically best way, wherein for instance a fuel consumption versus time is optimized.

The data processing unit may interpret the optical data such that the user is assisted in assessing field conditions, abnormalities of the field, unexpected deviations or other events of interest. Thus, due to the interpretation, the user may not need to interpret the raw optical data of the imaging device by him- of herself, which is cumbersome, difficult or even impossible. Further, the data processing unit provides the advantage of combining optical data of one or more imaging systems, which may acquire images from different positions, different angles and may even further allow a combination with the position data of the respective imaging devices to create a combined graphical information, such as in form of a map. This map may be combined with further data, for instance information of a driving means used for the agricultural operation, such as present fuel consumption during a ploughing operation, which may allow for a prediction of the estimated total energy/time needed for the whole field after ploughing just a few passes, etc. In other embodiments the system may predict a distance, a slip, a mechanical work, an efficiency, a power use, fuel consumption, etc.

Further, the information about the features may be provided to a user in form of acoustic information instead of or in addition to the optical information, which may allow a user to react immediately, for instance to a potential danger. Said reactions, which may include acceleration, slowing down or change in movement direction of the agricultural working means can also be induced in an automatic manner, without any manual user input.

A data link may be provided to allow transfer of the respective data, preferably in real time. Preferably the data link is wireless and uses the 4G mobile standard. Preferably, the data link is provided from the agricultural working means to a data processing cloud intelligence or a stationary host computer.

Preferably, the agricultural working means comprises a driving means, particularly preferred a tractor, for driving the agricultural working means and for moving the agricultural implement, attached to the driving means.

For example, the driving means can be a tractor and the working implement may be a plough, a cultivator, a disc harrow, a packer, a roller, a chopper, a seed drill, a disc spreader, a sprayer, a mower, a rake, a tedder, a round bale wrapper, etc. The position unit and/or the position determination unit may be arranged at any suitable position on the agricultural working means, such as on the driving means or the agricultural working implement connected to the driving means. For the case that a misfunction of the agricultural working means occurs, an emergency system may be implemented, which may allow to report on the position of the respective malfunctioning means that may also be shown on the map. This may facilitate the localization of a malfunctioning means. The agricultural working means may also comprise a robot or autonomous implement.

Preferably, the system further comprises a mapping unit for providing a graphical map based on the data processed by the data processing unit. The mapping unit may provide the information as any suitable 2D or 3D map representation or any further suitable representation. For example, sensor data may be suitably presented as a graph timeline, such as for example force measurements. Thus, the mapping unit may provide both respective maps and graphs etc.

Preferably, the system further comprises at least one second imaging device attached to the agricultural working means for acquiring images of an environment of the agricultural working means from a different perspective than the first imaging device. Preferably, in addition the first imaging device, one, two, three or even more second imaging devices can be provided. All of them can acquire images of an environment of the agricultural working means from a different perspective than the other imaging devices. This allows to acquire image data from the complete surroundings of the agricultural working means and allow obtaining a 360° view around the agricultural working means.

Any features explained above with regard to the first imagining device, such as for instance control, acquisition or data processing, may correspondingly apply for the at least one second imaging device. Thus, according to the present invention, an improved feature recognition can be provided, wherein the images taken by multiple optical first and second devices improve the feature determination, which may not be obtained with just a single system or a system that does not provide combined optical information. In particular, the use of multiple imaging devices may allow for a precise spatial determination. For instance, a spatial planar extension with respect to the agricultural field and a respective height of a feature, such as a stone or crop to be harvested may be determined to obtain a precise 3D-extension by combining the optical information of the imaging devices, which take optical data from different perspectives. This may allow for a precise spatial feature extension determination which may not be accurately performed by using just a single imaging device.

Preferably, the first or the at least one second imaging device is integrated into a smart phone attached to the agricultural working means. This allows using the camera already available a smart phone of the user for providing image date for the present system. The evolution of smart phone cameras allows using always the best available image quality for the present system. Further using the smart phone of the user reduces the investment. Preferably the smart phone can be attached to the agricultural working means by means of a cradle mounted at the agricultural working means. The smart phone can inserted into the cradle and can be securely held therein. Preferably an application, so called "app", can be provided on the smart phone for transmitting image data from the smart phone's camera to the system. Further the app may be integral part of the system and may process at least part of the data processing of the data processing unit. Thus, the smart phone maybe at least a part of the data processing unit or realize the data processing unit completely.

Preferably, the data processing unit calculates 2D and/or 3D photogrammetry data from the captured images of the first and/or at least one second imaging device. Thus, when working an agricultural field the image data can be used to calculate 2D and/or 3D photogrammetry data that can be used for the creation of a 2D map or 3D map of the agricultural field and/or for feature recognition etc. For example, a 3D map of the agricultural field can be calculated that integrates a 3D model of the field and further identifies any features, like for example boundaries of the field, obstacles, like large stones or fences, tracks, trenches, furrows, wheel tracks or the like.

This may allow for a full graphical representation of the agricultural field including all relevant features that may impact the agricultural operation. Accordingly, not only a 2D or even 3D representation of the agricultural field but also respective determined features maybe provided containing relevant information for performing the agricultural operation in an optimized manner. Accordingly, a corresponding digital twin of the agricultural field imaged may be formed. Thus, an agricultural analysis tool may be provided which can be used at remote location to plan and monitor each unique field over time. For example, said tool may be updated each year when ploughing or other agricultural operations on said agricultural field are performed. Further, already identified fixed obstacles may not need to be mapped each time as they are already detected and identified and/or localized.

Preferably, the data processing unit is arranged on the agricultural working means and/or comprises cloud based intelligence for real-time processing of data. Thus, the data processing unit can use local intelligence, like a computer or a smart phone arranged on the agricultural working means and can additionally or alternatively use cloud based intelligence for real-time processing of data. Such cloud based intelligence can provide a scalable and very high computational power that can be used to calculate image recognition, 3D photogrammetry or feature recognition.

Preferably, the system further comprises at least one display device, for displaying the acquired images and/or the enhanced combined graphical map to a user, wherein the display device is arranged at the agricultural working means at a position, wherein the user is able to see the display device while driving a driving means of the agricultural working means; and/or is arranged at a location remote from the driving means.

The display device may be provided as digital screen, which may be arranged on the driving means the user drives during the agricultural operation. The display device may be realized by the screen of a user's mobile phone. Therefore, the user, i.e. a farmer, can for example immediately see the measured data and the processed optical data when working the field and can associate such interpretation to a certain event or feature of the field and may accordingly react. On the other hand, the measured data and the interpretation of the optical data can also be shown and evaluated at a remote location. This is particularly useful in case of a robotic or autonomous working implement or when the driving means is autonomous and has no driver or user on-board. At a remote location, the user may for instance evaluate the data and interpretation at a later point in time. Further, the data can also be displayed to different users by using several display means at the same time, e.g. on the field and at the same time at the farm. The display device may allow different visual layers and customized user surfaces for the visualization of the map and other data and interpretation, such as characterizing feature attributes. In this way the user can view the data from different perspectives, helping the user to take a decision or to get further insights. The user may select different predefined filters of different signal processing/mathematical functions to the data, so the user can view the data from different perspectives. Preferably, the user may also be able to input text via the display, for example via a touch-display, and/or to record a digital photo via a camera to further information or explanation regarding an event or feature. Preferably, the input means may be a mobile phone connected to the system via a wired or wireless connection, i.e. WLAN or Bluetooth.

Preferably, the system further comprises an operation input controller for controlling the agricultural working operation, wherein the input controller is arranged on the driving means, wherein the user is able to perform inputs while driving the driving means; and/or is arranged at a location remote from the driving means. By the operation input controller the user can take immediate action, like re-adjustment of ploughing parameters, work settings, speed, avoid collisions etc.

The operation input controller may control the agricultural working operation based on a manually induced input or an automatically induced input. The operation input controller may comprise one or more buttons, touchpads, joysticks or the like. Preferably the operation input controller may be combined with the display device in the form of a separate touch-screen or may be realized by a mobile phone. Further the input means may be an acoustic input means that uses a microphone and an appropriate processing means for voice recognition. Thus, the user may input information orally, which is particularly useful when driving the driving means.
A user may for example immediately react on a certain event or feature of the field or soil when working the field. On the other hand, such reaction may be done at a distant location, i.e. at home or at the site of the manufacturer of the working implement.

Preferably, the display device and/or the operation input controller is integrated into a smart phone attached to the agricultural working means.

This may allow for a cheap and easy to implement solution of the system according to the present invention, wherein separate expensive special means may be omitted. In particular any camera means and/or means for calculating or interpreting data in the system according to the present invention may be implemented by using a smartphone. Further, also other sensor data for instance from smart phone internal sensors could be added to the data set such as for example speed, orientation, altitude etc. depending on the sensors provided in the smart phone in addition to the camera. This may lead to a system according to the present invention where the smart phone is the only sensing device provided. Even further, also position detection of respective parts of the system of the present invention may be realized by a smartphone, such as for instance via GPS.

Preferably, the system is interconnected with the agricultural implement and/or a driving means of the agricultural working means for an automatic adjustment of the settings of the agricultural implement and/or the driving means. The system can then immediately adjust the agricultural implement or the settings of the driving means automatically, i.e. a tractor speed, working height of the implement, etc..

Preferably, the data processing unit further comprises a feature detection unit for detecting at least one feature of an image of the at least one first imaging device, a feature location determination unit for locating said detected feature in the graphical map, and/or a feature determination unit for determining attributes of said detected feature relevant for agricultural operation of said detected feature.

Basically, the feature detection unit may allow a detection of anomalies in an agricultural field or any other feature of interest that can be optically determined. The feature determination unit may be set up to identify only certain predefined desired features and/or may be set up identifying any irregularities occurring in the acquired images and/or the map of data. Also, the spatial extension of the respective features may be determined by the optical data obtained. The spatial characterization of a feature may also be performed at the feature location determination unit and/or the feature determination unit.

The feature location determination unit may allow to characterize a location of the features considering the position information of the respective imaging device. The feature location determination may provide an absolute positional information or relative positional information of a feature, such as its distance to the agricultural working means. This may allow for a controlling action of the driver in reaction to said information, for instance, if the driver would precisely see whether he hits an upcoming obstacle with the tractor or an attached working implement or not and thus whether he must evade or not.

The feature determination unit may characterize an identified feature by its attributes and thus allows to characterize it in further detail. Said attributes may include color, texture and form information, which may be used alone or in combination to identify any suitable physical, chemical or further attributes of interest that may characterize the feature. For instance, it may be determined whether an identified obstacle in the field is a stone or an animal or it may be determined whether certain agricultural crops are ripe for harvest or not, which would accordingly allow a user to take appropriate action.

Preferably, the data processing unit is adapted to combine the received optical data of the imaging devices and the position data to obtain a combined graphical map and further to include the determined feature to the graphical map to obtain an enhanced combined graphical map showing location and attributes of the determined features.

Preferably, the attribute determination comprises one or more stationary features and/or one or more of dynamic features, wherein the stationary features preferably comprise: uniformity of soil work, straightness and uniformity of furrows, uniformity of furrow ends, agricultural working means dimensional settings, drift at slopes, coverage of vegetation, obstacle, wheel tracks, wet patches, patches of vegetation, and wherein the dynamic features comprise: animals or people in the field, machine(s), vehicle(s), agricultural implement(s). This allows to differentiate between different features, which may require different calculational approaches. The type of object may determine different kinds on how to use the data. For example, a tracking a stone is not necessary, since it will not move. Here, maybe the position of the stone may be inserted into the map, only. On the other hand, a tracking of a machine on the field could be done as the machine is dynamic and changes its position permanently. Thus, a tracking of such dynamic items could be conducted permanently / repeatedly.
Preferably, the data processing unit further comprises at least one machine learning unit and an input means for allowing the user to input confirmation data for at least confirming and rejecting the attribute determination, wherein the at least one machine learning unit calculates the attribute determination from of the optical data based on confirmation data input by the user via the input means.

Thus, the user has the possibility to confirm or reject the automatically calculated attribute determination by the feature determination unit if the attribute determination is correct or is incorrect. This user input trains the machine learning unit, such that it improves the reliability of the attribute determination. Such user input can for example be done directly when the user uses the agricultural working implement on the field, e.g. during ploughing. Then the user can directly "label" or explain to the system an abnormality of the optical data. However, a user can also provide his input at a later point in time, e.g. when analyzing the measured data after work, at a different site, or even at the site of the manufacturer of the working implement.

The machine learning unit can be automatically set up and trained during use. When several units are provided, they may communicate and exchange data such as raw or labelled data like draft force or optical data with "internal" or "external" machine learning units and be trained for the detection and determination of different objectives such as for instance stones and animals. Thus, as an example a draft force machine learning unit could exchange data with an optical machine learning unit provided in the system and vice versa. Thus, it may improve its force and optical interpretations over time. A trained optical system may be allowed to output its results such as labelled features, for instance a stone, to train a general sensing system for example a force sensing system to interpret sensor readings that correspond to the detected feature at a certain time and location. For example, a stone that is optically identified and labelled as a "stone" could be associated with the force sensor reading at time of passing the stone. This correlation of data can then be used to automatically train how to detect stones from a pure force sensor data set. That is force peaks of certain shape get a label "stone" which can be used for training of a secondary machine learning system for force sensor data. A further benefit may be provided in that other derived agriculture systems that lack optical sensing, but only employ for instance a force sensor could benefit from this training. A trained force detection algorithm may be distributed to these systems and they may accordingly be able to detect pre-trained features just by evaluating the force data stream without having an additional optical system. The at least one machine learning unit may comprise a neural network.

Preferably, the data calculation unit is further adapted to provide a suggested controlling response based on the determined features of the enhanced combined map of data, wherein the suggested controlling response is provided to a user via the display device, and/or automatically induces a controlling response at the agricultural working means, which is accordingly controlled based on the controlling response.

This may allow a user selecting one out of a group of proposed actions on a detected event. For instance, a user may be provided with one or more selectable options regarding an evasion of an obstacle. Said proposal may be predefined and may be chosen based on an algorithm, which may identify the detected feature and accordingly proposes one or more proper reactions. Said algorithm may also be trained, for instance by machine learning that may be trained by the acquired images and/or a respective user input, for instance as a reaction on a detected event. Thus, use of the system may be facilitated as a user may only decide between few items of a group of proper reactions.

Further, a user may also be able to add new images by using a smart phone via a respective GUI or app. This may allow simply taking a photo of a new or missing feature, which may then be added to the overall dataset and/or map and accordingly labelled automatically or by additional user input or a respective description. This may allow a training of the system based on the user inputs, which accordingly improves the system over time. Also, if the machine learning method employed in the present system is uncertain if the detected feature is correctly determined, the user may be presented with a corresponding input option to confirm or reject the proposed determination of said feature. The system may for instance request a user input if a certainty value for a distinct feature is not reached. Then, the user input may aid in reaching a certainty value such that the system stops demanding a user input for said and similar features in the future. This may allow a training of the system over time. The automatic controlling response may base on the outcome of a machine learning results provided with the present system.

The above-mentioned problems are also solved by a computer program, preferably a smartphone application, comprising instructions for controlling agricultural operations by using a system as described above.

### 4. Short description of the Figures

In the following, a preferred embodiment of the invention is disclosed by means of the figure, in which:

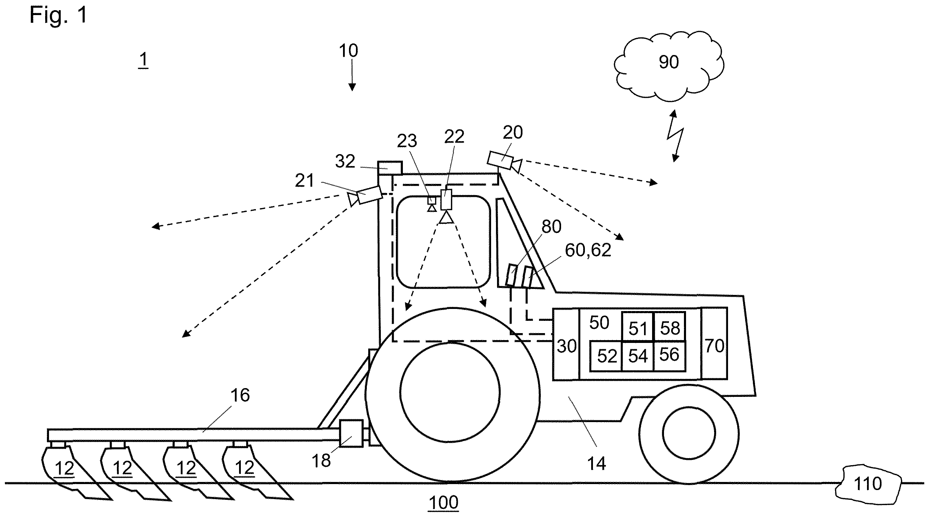

- Fig. 1: shows a schematic view of an exemplary embodiment of the system.

### 5. Description of preferred embodiments

In the following preferred embodiments of the invention are disclosed by means of the figure.

Fig. 1 shows an exemplary embodiment of a system 1 comprising an agricultural working means 10 that encloses an agricultural working implement 16, for example in form of a plough with plough shares 12. The agricultural working means 10 further comprises a driving means 14, for example in form of a tractor. The agricultural working implement 16 is attached to the driving means 14, which draws it. As shown, the agricultural working means 10 is presently ploughing the soil of an agricultural field 100. Although the preferred embodiment is related to a ploughing operation example, the present invention is not limited to this particular embodiment but is suitable for any agricultural application.

Further, a sensor 18 is provided in form of a draft sensor which measures the draft force of the driving means 14 that is applied to the agricultural working means 10.

A first imaging device 20 in form of a digital camera is attached to the agricultural working means 10, preferably to the upper part of the user's compartment of the driving means 14. In the shown embodiment, the first imaging device 20 acquires images from the front of the agricultural working means 10. Further imaging devices 21, 22, 23 in form of additional digital cameras are also attached to the agricultural working means 10. The further cameras 21, 22, 23 are directed to other sides of the agricultural working means 10 for capturing a different field of view. A second camera 21 is directed to the rear of the driving means 14, and a third camera 22 is directed to the right side and a fourth camera 23 to the left side of the driving means 14. Thus, the imaging devices 20, 21, 22, 23 provide image data from the complete surrounding of the agricultural working means 10. This allows combining the images to one 360° image of the surrounding around the agricultural working means.

A data processing unit 50 for data processing of captured images and sensed data may be located at the agricultural working means 10. The data processing unit 50 comprises a data interpretation unit 51, a feature detection unit 52, a feature location determination unit 54, a feature determination unit 56 and a machine learning unit 58.

Preferably, the system 1 may further comprises a further data processing unit (not shown) for providing processed data and supporting the data processing means 50. Whereas the data processing unit 50 is adapted to be provided on the agricultural working means 10, the further data processing unit is adapted to be provided at a location remote from the agricultural working means 10, for example in central stationary server.

Further, a position unit 30 with a position determination 32 is provided at the driving means 14. The position unit 30 determines the absolute position of the agricultural working means 10, in particular the positions of the driving means 14 and the agricultural working implement 16, by a satellite navigation system, for example GPS, Galileo, GLONAS or Beidou. The imaging devices 20, 21, 22, 23 are preferably connected to the position unit 30 via the data processing unit 50, such that data exchange between the position unit 30 and the first imaging devices 20 is enabled. The position unit 30 can therefore determine the absolute positions of the imaging devices 20, 21, 22, 23 and of the agricultural working means 10. In the embodiment shown, a position determination unit 32 is provided at the driving means 14. Preferably, the position determination unit 32 is a GPS receiver for determining of the exact position of the driving means 14, which exchanges data with the position unit 30. Thus, the GPS receiver is able to send and receive satellite position data and exchange this information with the position unit. However, the position determination unit 32 may also be arranged on the driving means 14, the agricultural working implement 10 to determine respective absolute or relative positions of the respective parts of the system 1.

The imaging devices 20, 21, 22, 23 are preferably digital cameras and transfer their digital images to the data processing unit 50, which is provided at the driving means 14. The data interpretation unit 51 of the data processing unit 50 combines the provided image data by the imaging devices 20, 21, 22, 23 to a combined map. The data interpretation unit 51 interprets the optical data of the imaging devices 20 and 22 in relation to the position data provided by the position unit 30 and the measured sensor data of a sensor 18 at or for the agricultural implement and calculates a 2D or a 3D map of the field. This calculation is preferably done in real time, during the agricultural operation.

The data interpretation unit 51 may also calculate an interpretation of any detected features such as feature 110, which is exemplarily shown as a stone 110 that is located in the agricultural field 100. Data transfer between the imaging devices 20, 22 and the first data processing unit 50 could be established in any suitable manner, for instance, as shown, in a wired connection as shown for the first imaging devices 20 and in a suitable wireless manner for the second imaging device 22.

The data processing unit 50 further comprises the feature detection unit 52, which comprises a specific software to allow identifying features in the images and/or the map created by the images, such as feature 110, which is a stone lying in the agricultural field 100. The data processing unit 50 further comprises the feature location determination unit 54, which allows calculating the position of the detected feature. For this, respective images of the first imaging device 20 and the second imaging device 22 are combined considering the positions of the imaging devices 20 and 22 and the spatial dimensions and of the detected features, such as height, width and depth of feature 110.

The data processing unit 50 further comprises a feature determination unit 56, which allows to identify respective attributes of said feature. For instance, in the embodiment shown, the feature determination unit 56 allows by determining the structure and color of feature 110 that said feature is a stone and not an animal of the same spatial dimensions.

Respective information about the feature, its location and specific attributes can be combined and integrated in the combined map, which is presented to a user via a display device 60, which is provided at the driving means 14. The display device 60 is located within the driving compartment of the driving means 14 such that a driver can directly see the images acquired by the imaging devices 20, 21, 22, 23 and/or the combined map including detected features and/or any further derived values, which would allow the driver of the tractor to control the ploughing.

Further, a mapping unit 70 is provided at the driving means 14. The mapping unit receives the data of the data processing unit 50 and creates a 2D or 3D map of data combining any image data, position data, and feature data obtained by the other units and devices provided in the system. Said map can be shown via the display device 60 to the driver and shows all relevant data of the present agricultural operation, including positioning of the driving means in the agricultural field, location and characteristics of any features.

For controlling the agricultural working means 10, an operation input controller 80 is provided at the driving means 14, which allows a user to adjust any desired parameter of interest such as for example driving speed of the driving means 14, orientation of the driving means 14 and/or the agricultural working implement 16, movement of the imaging devices 20, 21, 22, 23 etc.

The display device 60, the operation controller 80, the position unit 30, the data processing unit 50, the mapping unit 70 and one of the imaging devices 20, 21, 22, 23 can be also realized by a smart phone 62 that is attached to the agricultural working means 10. The smart phone 62 may run an application or program that enables integration and data transfer with the other elements of the system 1 and the agricultural working means.

The data processing unit 50 may further comprise cloud based intelligence 90 for real-time processing of data. Such cloud based intelligence 90 may be provided by an external server that is wirelessly connected to the data processing unit 50 via the 4G mobile data standard or WLAN or any other wireless data connection. The cloud based intelligence 90 can be from an external service provider and be located at any arbitrary physical location. The cloud based intelligence 90 can provide a very high computation power, used for example for a real-time 3D photogrammetry of the captured optical data.

Further, the data processing unit 50 preferably comprises a machine learning unit 58 that may calculate a determination of the features 110, which were optically detected. The machine learning unit 58 uses known machine learning methods, like supervised learning, unsupervised learning, reinforcement learning and neural networks/deep learning. Thus, the machine learning unit 58 may use different machine learning tools to comply with different situations. Any of the machine learning operations can also be implemented at a remote location such as by the cloud based intelligence 90.

For a manual training of the machine learning unit 58 the user may input a confirmation or rejection of the automatic feature detection via the operation input controller 80, a touch sensitive display device 60 or the smart phone 62.

### List of reference signs

- 1: system
- 10: agricultural working means
- 12: plough shares
- 14: driving means
- 16: agricultural working implement
- 18: sensor
- 20: first imaging device
- 21: second imaging device
- 22: third imaging device
- 23: fourth imaging device
- 30: position unit
- 32: position determination unit
- 50: data processing unit
- 51: data interpretation unit
- 52: feature detection unit
- 54: feature location determination unit
- 56: feature determination unit
- 58: machine learning unit
- 60: display device
- 62: smart phone
- 70: mapping unit
- 80: operation input controller
- 90: cloud based intelligence
- 100: agricultural field
- 110: feature

## Claims

1. A system (1) for controlling agricultural operations comprising:
a. an agricultural working means (10) for working on an agricultural field (100);
b. a first imaging device (20) attached to the agricultural working means (10) for acquiring images of an environment of the agricultural working means (10), wherein the first imaging device (20) is adapted to provide optical data;
c. an agricultural implement (16) comprised by the agricultural working means (10);
d. a sensor (18) at or for the agricultural implement (18), wherein the sensor (18) is adapted to provide sensor data;
e. a position unit (30) for determining the absolute position of the agricultural working means (10), wherein the position unit (30) is adapted to provide position data; and
f. a data processing unit (50) for processing optical data received at least from the first imaging device (20) in relation to position data received from the position unit (30) and the sensor data.

2. System (1) according to claim 1, further comprising a mapping unit (70) for providing a graphical map based on the data processed by the data processing unit (50).

3. System (1) according to one of the claims 1 or 2, further comprising at least one second imaging device (21, 22, 23) attached to the agricultural working means (10) for acquiring images of an environment of the agricultural working means (10) from a different perspective than the first imaging device (20).

4. System according to one of the claims 1 to 3, wherein the first (20) or the at least one second imaging device (21, 22, 23) is integrated into a smart phone (62) attached to the agricultural working means (10).

5. System according to one of the claims 1 to 4, wherein the data processing unit (50) calculates 2D and/or 3D photogrammetry data from the captured images of the first (20) and/or at least one second imaging device (21, 22, 23).

6. System according to one of the claims 1 to 5, wherein the data processing unit (50) is arranged on the agricultural working means (10) and/or comprises cloud based intelligence (90) for real-time processing of data.

7. System according to one of the claims 1 to 6, further comprising at least one display device (60), for displaying the acquired images and/or the enhanced combined graphical map to a user, wherein the display device (60)
a. is arranged at the agricultural working means (10) at a position, wherein the user is able to see the display device (60) while driving a driving means (14) of the agricultural working means (10); and/or
b. is arranged at a location remote from the driving means.

8. System according to one of the of the claims 1 to 7, wherein the system (1) further comprises an operation input controller (80) for controlling the agricultural working operation, wherein the input controller (80)
a. is arranged on the driving means (14), wherein the user is able to perform inputs while driving the driving means (14); and/or
b. is arranged at a location remote from the driving means.

9. System according to one of the claims 7 or 8, wherein the display device (60) and/or the operation input controller (80) is integrated into a smart phone attached to the agricultural working means (10).

10. System according to one of the claims 1 to 9, wherein the system is interconnected with the agricultural implement (16) and/or a driving means (14) of the agricultural working means (10) for an automatic adjustment of the settings of the agricultural implement (16) and/or the driving means (14).

11. System (1) according to one of the claims 1 to 10, wherein the data processing unit (50) further comprises:
a. a feature detection unit (52) for detecting at least one feature (110) of an image of the imaging devices (20, 21, 22, 23);
b. a feature location determination unit (54) for locating said detected feature (110) in the graphical map; and/or
c. a feature determination unit (56) for determining attributes of said detected feature relevant for agricultural operation of said detected feature (110).

12. System according to claim 11, wherein the data processing unit (50) is adapted to combine the received optical data of the imaging devices (20, 21, 22, 23) and the position data to obtain a combined graphical map and further to include the determined feature to the graphical map to obtain an enhanced combined graphical map showing location and attributes of the determined features.

13. System according to claims 11 or 12, wherein attribute determination comprises one or more stationary features and/ or one or more dynamic features, wherein the stationary features preferably comprise:
a. uniformity of soil work,
b. straightness and uniformity of furrows,
c. uniformity of furrow ends,
d. agricultural working means dimensional settings,
e. drift at slopes,
f. coverage of vegetation,
g. obstacle,
h. wheel tracks,
i. wet patches,
j. patches of vegetation,
and wherein the dynamic features preferably comprise:
k. animals or people in the field,
l.machine(s),
m. vehicle(s),
n. agricultural implement(s).

14. System according to one of the claims 11 to 13, wherein the data processing unit (50) comprises a machine learning unit (58) and an input means (60, 62) for allowing the user to input confirmation data for at least confirming and rejecting the attribute determination, wherein the machine learning unit (58) calculates the attribute determination from of the optical data based on confirmation data input by the user via the input means.

15. Computer program, preferably a smartphone application, comprising instructions for controlling agricultural operations by using a system (1) according to one of the claims 1 to 14.
